# EUROPÄISCHE PATENTSCHRIFT

(11) **EP 3 811 831 B1**
(45) Veröffentlichungstag und Bekanntmachung des Hinweises auf die Patenterteilung: **18.01.2023**
(21) Anmeldenummer: 20198052.1
(22) Anmeldetag: 24.09.2020
(51) Int. Cl.: A47J 31/60

(54) **GETRÄNKEAUTOMAT**
DRINKS MACHINE
DISTRIBUTEUR AUTOMATIQUE DE BOISSONS

(30) Priorität: 23.10.2019 DE 102019216311
(43) Veröffentlichungstag der Anmeldung: 28.04.2021
(73) Patentinhaber: BSH Hausgeräte GmbH, 81739 München (DE)
(72) Erfinder: Einsiedler, Thomas, 83278 Traunstein (DE); Mies, Maximilian, 83253 Rimsting (DE); Sollmann, Martin, 83278 Traunstein (DE); Steffl, Michael, 83250 Marquartstein (DE)

(56) Entgegenhaltungen:
- EP-A1- 2 705 783
- EP-A1- 3 078 309
- DE-A1-102015 103 671
- DE-A1-102016 108 822

## Beschreibung

Die vorliegende Erfindung betrifft einen Getränkeautomaten, insbesondere einen Kaffeevollautomaten, mit einem Behälter zur Bevorratung eines Reinigungs-/Entkalkungsmittels. Die Erfindung betrifft außerdem ein Verfahren zur Abschätzung einer Menge an Reinigungs-/Entkalkungsmittel in einem Behälter eines solchen Getränkeautomaten.

Moderne Getränkeautomaten, insbesondere Kaffeevollautomaten, besitzen üblicherweise einen Behälter (Kartusche), in welchem ein Reinigungs-/Entkalkungsmittel, beispielsweise Entkalkungstabletten, bevorratet sind, um turnusmäßig einen Reinigungs-/Entkalkungsvorgang durchzuführen, bei welchem insbesondere die mit Heißwasser und Kaffee in Kontakt tretenden Teile des Getränkeautomaten gereinigt bzw. entkalkt werden. Um dabei einen zuverlässigen Reinigungs-/Entkalkungsvorgang durchführen zu können, ist es erforderlich, dass genügend Reinigungs-/Entkalkungsmittel in dem Behälter bevorratet ist. Typischerweise wird dabei bislang ein Füllstand an Reinigungs-/Entkalkungsmittel in einem solchen Behälter lediglich geschätzt, wobei davon ausgegangen wird, dass pro Reinigungs-/Entkalkungsvorgang eine bestimmte Menge an Reinigungs-/Entkalkungsmittel verbraucht wird. Diese Menge wird dann von einem Gesamtfüllstand abgezogen. Wird dabei beispielsweise 1/10 des in dem Behälter insgesamt zu bevorratenden Reinigungs-/Entkalkungsmittel je Reinigungs-/Entkalkungsvorgang verbraucht, so ist davon auszugehen, dass nach zehn derartigen Reinigungs-/Entkalkungsvorgängen kein Reinigungs-/Entkalkungsmittel mehr in dem Behälter vorhanden ist und dieses aufgefüllt werden muss.

Ein solcher Getränkeautomat ist aus dem Dokument EP 3 078 309 A1 bekannt.

Die Abschätzung des noch vorhandenen Reinigungs-/Entkalkungsmittels kann auch rein zyklusabhängig erfolgen, wobei kurz vor einem zur Neige gehen des Reinigungs-/Entkalkungsmittels einem Nutzer eine entsprechende Warnanzeige an einem Display angezeigt wird, wodurch er aufgefordert wird, Reinigungs-/Entkalkungsmittel in den Behälter nachzufüllen. Alternativ sind selbstverständlich auch Sensoren denkbar, über welche ein exakter Füllstand an Reinigungs-/Entkalkungsmittel in dem Behälter erfassbar ist.

Nachteilig ist hierbei jedoch, dass die noch im Behälter vorhandene Menge an Reinigungs-/Entkalkungsmittel entweder nur grob geschätzt werden kann oder aber über vergleichsweise aufwendige und damit auch teure Sensoren ermittelt werden muss.

Die vorliegende Erfindung beschäftigt sich daher mit dem Problem, einen Getränkeautomaten anzugeben, der insbesondere die aus dem Stand der Technik bekannten Nachteile überwindet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Menge eines in einem Behälter eines Getränkeautomaten bevorrateten Reinigungs-/Entkalkungsmittels über eine Differenzwassermessung vergleichsweise einfach, genau und zudem kostengünstig zu bestimmen. Hierzu weist der erfindungsgemäße Getränkeautomat, welcher beispielsweise als Kaffeevollautomat ausgebildet sein kann, den zuvor beschriebenen Behälter zur Bevorratung des Reinigungs-/Entkalkungsmittels auf, der in einem unteren Bereich, beispielsweise in einem Boden, einen Anschluss und in einem oberen Bereich, beispielsweise einer Seitenwand oder einem Deckel, einen Überlauf aufweist. Des Weiteren besitzt der Getränkeautomat eine Leitung, über welche Wasser über den Anschluss in den Behälter eingefüllt werden kann und über welche Wasser über den Anschluss aus dem Behälter entnehmbar ist. Im Bereich der Leitung sind dabei eine Pumpe sowie ein Durchflussmesser angeordnet, wobei über die Pumpe ein Befüllen und ein Entleeren des Behälters mit Wasser erfolgt, während über den Durchflussmesser die Menge an in den Behälter gepumptem Wasser und aus diesem abgelassenem Wasser erfasst werden kann. Des Weiteren vorgesehen ist eine Kontrolleinrichtung, die derart ausgebildet ist, dass sie aus einer Differenz aus der über den Durchflussmesser in den Behälter gepumpten und einem Behälterleervolumen entsprechenden Wassermenge und der über den Durchflussmesser anschließend wieder aus dem Behälter komplett entnehmbaren Wassermenge eine Menge des in dem Behälter vorhandenen Reinigungs-/Entkalkungsmittels ermittelt. Konkret geschieht dies dabei wie folgt: Zunächst wird der Behälter, welcher beispielsweise ein Behälterleervolumen von 100 cm³ aufweist, über die Pumpe und den Anschluss mit 100 cm³ Wasser befüllt. Ist in diesem Zustand in dem Behälter ein Reinigungs-/Entkalkungsmittel angeordnet, insbesondere in Tablettenform, so verdrängt dieses eine entsprechende Wassermenge, welche über den Überlauf abfließen kann. Beträgt beispielsweise das Volumen des Reinigungs-/Entkalkungsmittels 80 cm³, so laufen bei einer Wassermenge von 100 cm³, die in den Behälter gepumpt wird, 80 cm³ über den Überlauf über und ab. 20 cm³ an Wasser verbleiben in diesem Fall in dem Behälter. Wird nun anschließend das Wasser aus dem Behälter komplett abgelassen, so fließen die in dem Behälter vorhandenen 20 cm³ über den Durchflussmesser ab und werden dort erfasst. Aus der Differenz zwischen der in den Behälter gepumpten und aus diesem wieder abgelassenen Wassermenge kann auf ein Volumen des in dem Behälter angeordneten Reinigungs-/Entkalkungsmittels geschlossen und darüber die Menge an noch in dem Behälter vorhandenem Reinigungs-/Entkalkungsmittel ermittelt werden. Gehen somit beispielsweise maximal 80 cm³ Reinigungs-/Entkalkungsmittel in Tablettenform in den Behälter, so würde dies entsprechend dem zuvor berechneten Beispiel bedeuten, dass noch der komplette Vorrat an Reinigungs-/Entkalkungsmittel in dem Behälter vorhanden ist. Wird bei dem vorherigen Beispiel jedoch nach dem Einpumpen von Wasser in den Behälter eine gleich große Wassermenge, das heißt 100 cm³, wieder aus dem Behälter entnommen, so deutet dies darauf hin, dass kein Reinigungs-/Entkalkungsmittel mehr in dem Behälter vorhanden ist und dieser neu mit Reinigungs-/Entkalkungsmittel befüllt werden müsste. Alles in allem kann mit einem derartigen Getränkeautomat eine Menge an in dem Behälter vorhandenem Reinigungs-/Entkalkungsmittel vergleichsweise einfach, kostengünstig und dennoch zuverlässig abgeschätzt werden, wobei insbesondere auf spezielle Sensoren verzichtet werden kann. Von weiterem großem Vorteil ist, dass durch den Entfall derartiger Sensoren auch keine hierfür erforderliche Hardware bzw. kein hierfür erforderlicher Bauraumbedarf vorgehalten werden muss. Auch ermöglicht der erfindungsgemäße Getränkeautomat im Vergleich zu einer rein zyklusabhängigen Abschätzung eine vergleichsweise genau Ermittlung der noch in dem Behälter vorhandenen Menge an Reinigungs-/Entkalkungsmitteln.

Bei einer vorteilhaften Weiterbildung der erfindungsgemäßen Lösung ist der Überlauf mit einer Tropfschale verbunden. Um eine Verschmutzung und/oder Beschädigung des Getränkeautomaten zuverlässig ausschließen zu können, ist der Überlauf mit einer Tropfschale verbunden, in welcher die durch das in dem Behälter vorhandene Reinigungs-/Entkalkungsmittel verdrängte Wasservolumen abfließen kann. Bei einer weiteren vorteilhaften Ausführungsform der erfindungsgemäßen Lösung ist eine Anzeigeeinrichtung vorgesehen, über welche die von der Kontrolleinrichtung ermittelte Menge des in dem Behälter vorhandenen Reinigungs-/Entkalkungsmittels visualisierbar ist. Erreicht somit die durch die Kontrolleinrichtung ermittelte Menge an in dem Behälter vorhandenem Reinigungs-/Entkalkungsmittel einen vordefinierten unteren Grenzwert, so kann über die Anzeigeeinrichtung ein entsprechender Hinweis, insbesondere eine Warnfunktion, an einen Nutzer bzw. eine Nutzerin übermittelt werden.

Zweckmäßig weist das Reinigungs-/Entkalkungsmittel eine Tablettenform auf. Eine derartige Tablettenform ist erforderlich, um ein entsprechendes Volumen an Wasser zu verdrängen und über die Ermittlung der Differenz aus eingepumpter und abgelassener Wassermenge auf die Menge an noch in dem Behälter vorhandenem Reinigungs-/Entkalkungsmittel zu schließen. Außerdem ermöglicht eine derartige Tablettenform des Reinigungs-/Entkalkungsmittels ein besonders leichtes Auffüllen des Behälters.

Bei einer weiteren vorteilhaften Ausführungsform der erfindungsgemäßen Lösung ist eine Heizeinrichtung zum Beheizen des Behälters, insbesondere zum Beheizen des in dem Behälter vorhandenen Reinigungs-/Entkalkungsmittels vorgesehen. Mittels einer derartigen Heizeinrichtung, welche beispielsweise als Flächenheizung, insbesondere in der Art einer Warmhalteplatte unterhalb des Behälters bzw. unterhalb des Reinigungs-/Entkalkungsmittels angeordnet sein kann, kann eine chemische Reaktion der Tabletten positiv beeinflusst werden, da die Reaktionsgeschwindigkeit während der Lösungsbildung deutlich beschleunigt wird. Hierdurch kann insbesondere eine Bezugszeit für einen Nutzer reduziert werden. Außerdem ermöglicht eine solche Heizeinrichtung nach Beendigung des Reinigungs-/Entkalkungsvorgangs ein schnelleres Trocken des Reinigungs-/Entkalkungsmittels, wodurch der chemische Reaktionsprozess schneller gestoppt und zudem die Lebensdauer des Reinigungs-/Entkalkungsmittels erhöht werden kann. Darüber hinaus kann durch eine derartige Heizeinrichtung und ein schnelleres Stoppen des chemischen Reaktionsprozesses nach Beendigung des Reinigungs-/Entkalkungsvorgangs auch die Gefahr eines Verschlammens bzw. Nachquellens des in Tablettenform vorliegenden Reinigungs-/Entkalkungsmittels reduziert werden.

Zweckmäßig ist die Heizeinrichtung Bestandteil einer Brüheinrichtung des in diesem Fall als Kaffeevollautomaten ausgebildeten Getränkeautomaten. Das Beheizen des Reinigungs-/Entkalkungsmittels kann in diesem Fall von einer ohnehin in dem Getränkeautomaten vorhandenen Heizeinrichtung übernommen werden, die beispielsweise zum Aufbrühen von Kaffee verwendet wird. Rein theoretisch selbstverständlich auch eine separate Heizeinrichtung ausschließlich zum Aufheizen des Reinigungs-/Entkalkungsmittels denkbar.

Die vorliegende Erfindung beruht weiter auf dem allgemeinen Gedanken, ein Verfahren zur Abschätzung einer Menge an Reinigungs-/Entkalkungsmittel in einem Behälter eines Getränkeautomaten anzugeben, welches auf einer Erfassung eines von dem Reinigungs-/Entkalkungsmittel verdrängten Wasservolumens beruht. Bei dem erfindungsgemäßen Verfahren wird dabei zunächst von einer Pumpe eine vordefinierte und einem Behälterleervolumen entsprechende Wassermenge über einen Anschluss in den Behälter gepumpt und zugleich über einen Durchflussmesser gemessen bzw. erfasst. Anschließend wird das Wasser wieder über den Anschluss komplett aus dem Behälter entnommen und die entnommene Menge über den Durchflussmesser gemessen bzw. erfasst. Eine Kontrolleinrichtung ermittelt nun aus der Differenz von aus der in den Behälter gepumpten Wassermenge und der anschließend wieder aus dem Behälter komplett entnommenen Wassermenge ein Volumen des in dem Behälter vorhandenen Reinigungs-/Entkalkungsmittels, woraus auf die tatsächlich noch vorhandene Menge problemlos geschlossen werden kann. Das Verfahren funktioniert dabei wie folgt: Angenommen das Behälterleervolumen beträgt 100 cm³ und das Volumen des darin angeordneten Reinigungs-/Entkalkungsmittels beträgt 50 cm³, so wird zunächst über die Pumpe eine Wassermenge von 100 cm³ in den Behälter gepumpt. Da 50 cm³ dieses Wasservolumens durch das Reinigungsmittel/Entkalkungsmittel verdrängt werden, laufen 50 cm³ über den Überlauf über und beispielsweise in eine Tropfschale ab. Anschließend wird das komplette Wasser aus dem Behälter abgelassen und gemessen, wobei sich eine abgelassene Wassermenge von 50 cm³ ergibt. Das in dem Behälter vorhandene Volumen an Reinigungs-/Entkalkungsmittel beträgt somit 50 cm³, was über eine entsprechende, zugeordnete Dichte, zu einer Menge an Reinigungsmittel/Entkalkungsmittel führt. Mit dem erfindungsgemäßen Verfahren ist es somit möglich, ohne entsprechende Sensoren und damit vergleichsweise kostengünstig, aber dennoch hochgenau, die Menge an in dem Behälter vorhandenem Reinigungs-/Entkalkungsmittel abzuschätzen.

Bei einer vorteilhaften Weiterbildung des erfindungsgemäßen Verfahrens wird vor dem Abschätzen der Menge an Reinigungs-/Entkalkungsmittel, das heißt bei einem eigentlichen Reinigungs-/Entkalkungsvorgang, das in dem Behälter vorhandene Reinigungs-/Entkalkungsmittel mittels einer Heizeinrichtung beheizt, wodurch die chemische Reaktion zum Herstellen einer Reinigungs-/Entkalkungslösung beschleunigt wird. Hierdurch kann der Reinigungs-/Entkalkungsvorgang insgesamt beschleunigt werden. Nach dem Ablassen der Lösung aus dem Behälter bewirkt die Heizeinrichtung ein schnelleres Trocknen des Reinigungs-/Entkalkungsmittels, wodurch die chemische Reaktion schneller gestoppt werden kann. Hierdurch lassen sich insbesondere ein Quellen und ein Verschlammen des Behälters reduzieren.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Fig. 1: einen erfindungsgemäßen Getränkeautomaten,
- Fig. 2: einen Behälter für einen Getränkeautomaten entsprechend der Fig. 1 in einer Seitenansicht,
- Fig. 3: eine Darstellung wie in Fig. 2, jedoch von schräg unten,
- Fig. 4: eine Schnittdarstellung durch eine mögliche Ausführungsform eines solchen Behälters.

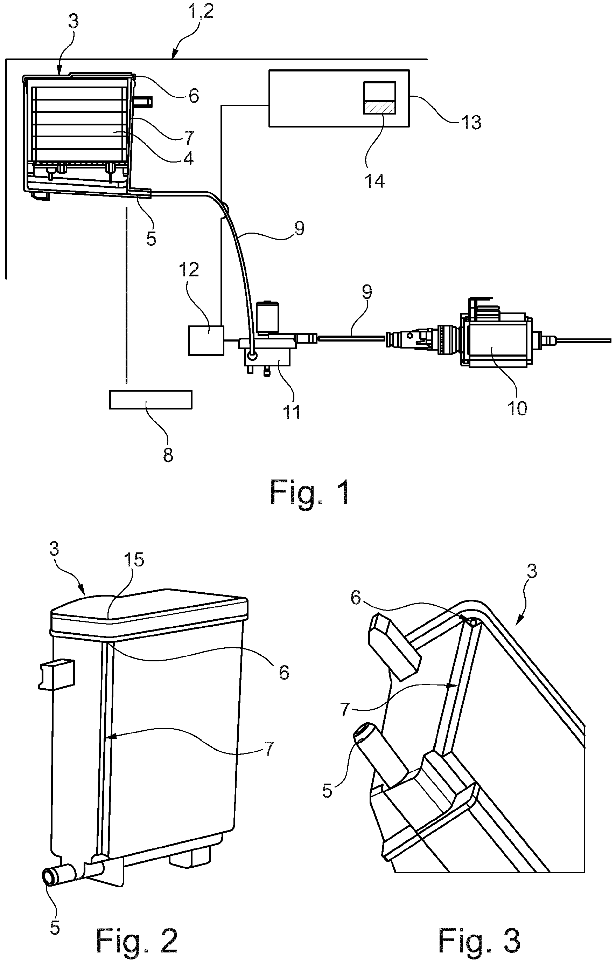

Entsprechend der Fig. 1, weist ein erfindungsgemäßer Getränkeautomat 1, welcher beispielsweise als Kaffeevollautomat 2 ausgebildet sein kann, einen Behälter 3 zur Bevorratung eines Reinigungs-/Entkalkungsmittels 4 auf (vgl. auch die Fig. 2 bis 4). In einem unteren Bereich besitzt dieser Behälter 3 einen Anschluss 5 und in einem oberen Bereich einen Überlauf 6 (vgl. auch die Fig. 2 und 3). Der Überlauf 6 kann dabei in eine zurückgenommene Rinne 7 im Gehäuse des Behälters 3 übergehen und ermöglicht dadurch einen Abfluss von über den Überlauf 6 und die Rinne 7 über bzw. ablaufendem Wasser in eine Tropfschale 8. Darüber hinaus vorgesehen ist eine Leitung 9, über welche Wasser über den Anschluss 5 in den Behälter 3 eingefüllt und über den Anschluss 5 auch wieder aus dem Behälter 3 entnommen werden kann. Im Bereich dieser Leitung 9 sind dabei eine Pumpe 10 sowie ein Durchflussmesser 11 angeordnet. Ebenfalls vorgesehen ist eine Kontrolleinrichtung 12, die derart ausgebildet ist, dass sie aus einer Differenz aus der über den Durchflussmesser 11 in den Behälter 3 gepumpten und einem Behälterleervolumen entsprechenden Wassermenge und der über den Durchflussmesser 11 anschließend wieder aus dem Behälter 3 abgelassenen Wassermenge eine Menge des in dem Behälter 3 vorhandenen Reinigungs-/Entkalkungsmittels 4 ermittelt.

Konkret arbeitet dabei der erfindungsgemäße Getränkeautomat 1 entsprechend dem nachfolgend beschriebenen, erfindungsgemäßen Verfahren. Bei diesem wird zunächst über die Pumpe 10 eine vordefinierte und dem Behälterleervolumen entsprechende Wassermenge über die Leitung 9 und den Anschluss 5 in den Behälter 3 gepumpt. Der Behälter 3 kann beispielsweise ein Behälterleervolumen von 100 cm³ aufweisen. Ist nun in dem Behälter 3 ein Reinigungs-/Entkalkungsmittel 4 mit einem Volumen von 30 cm³ angeordnet, so läuft ein derartiges, gleich großes Volumen über den Überlauf 6 und beispielsweise die Rinne 7 in die Tropfschale 8 ab. Anschließend wird das in dem Behälter 3 vorhandene Wasser über den Anschluss 5 und den Durchflussmesser 11 komplett abgelassen, wobei im vorliegenden Fall über den Durchflussmesser 11, 70 cm³ ablaufen würden. Aus der Differenz der eingepumpten Wassermenge in Höhe von 100 cm³ und der abgelassenen Menge in Höhe von 70 cm³ errechnet sich eine Menge von 30 cm³, die dem Volumen des in dem Behälter 3 angeordneten Reinigungs-/Entkalkungsmittels 4 entspricht. Über eine zugehörige Dichte kann somit die Menge an in dem Behälter 3 angeordneten Reinigungs-/Entkalkungsmittel 4 vergleichsweise einfach berechnet werden. Mit dem erfindungsgemäßen Verfahren und insbesondere auch mit dem erfindungsgemäßen Getränkeautomaten 1 kann insbesondere auf aufwendige und teure Sensoren sowie dafür erforderliche Hardware verzichtet werden und trotzdem äußerst schnell und exakt die in dem Behälter 3 vorhandene Menge an Reinigungs-/Entkalkungsmittel 4 bestimmt werden.

Entsprechend der Fig. 1 kann der erfindungsgemäße Getränkeautomat 1 zusätzlich eine Anzeigeeinrichtung 13, insbesondere ein Display aufweisen, über welche die von der Kontrolleinrichtung 12 ermittelte Menge des in dem Behälter 3 vorhandenen Reinigungs-/Entkalkungsmittels 4 visualisierbar ist. Hierzu kann dort beispielsweise eine Prozentangabe oder ein visualisierter Füllstand 14 angezeigt werden.

Das Entkalkungs-/Reinigungsmittel 4 ist vorzugsweise in der Art von Tabletten ausgebildet und dadurch vergleichsweise einfach über ein Abnehmen eines Deckels 15 in den Behälter 3 einlegbar.

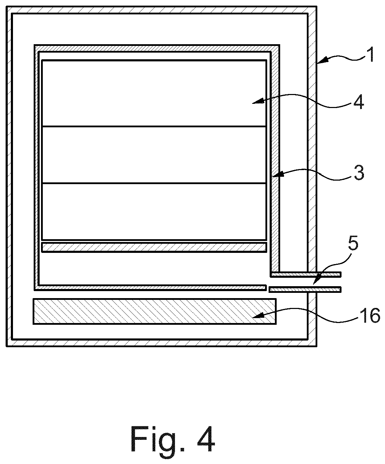

Darüber hinaus vorgesehen sein kann eine Heizeinrichtung 16 (vgl. Fig. 4) zum Beheizen des Behälters 3, insbesondere zum Beheizen des in dem Behälter 3 vorhandenen Reinigungs-/Entkalkungsmittels 4. Über ein Erhitzen des Reinigungs-/Entkalkungsmittels 4 lässt sich eine Lösung desselben aufgrund eines chemischen Lösevorgangs schneller gestalten und dadurch die Wartezeit für einen Benutzer reduzieren. Zudem kann auch nach einem eigentlichen Reinigungs-/Entkalkungsvorgang ein schnelleres Trocknen des Reinigungs-/Entkalkungsmittels 4 erfolgen, wodurch ein Verschlammen des Getränkeautomaten 1 reduziert und damit eine Lebenserwartung erhöht werden können. Zudem kann durch ein Beheizen des Reinigungs-/Entkalkungsmittels 4 nach dem Reinigungs-/Entkalkungsvorgang der chemische Prozess schneller gestoppt werden. Die Heizeinrichtung 4 kann dabei in der Art einer Wärmeplatte unterhalb des Reinigungs-/Entkalkungsmittels angeordnet sein, wie dies gemäß der Fig. 4 dargestellt ist. Rein theoretisch ist selbstverständlich auch denkbar, dass für die Heizeinrichtung 16 eine ohnehin in dem Getränkeautomaten 1, insbesondere in dem Kaffeevollautomaten 2 vorhandene Heizeinrichtung, beispielsweise im Bereich einer Brüheinrichtung, verwendet wird.

Mit dem erfindungsgemäßen Getränkeautomaten 1 und dem erfindungsgemäßen Verfahren lässt sich vergleichsweise einfach, schnell, kostengünstig aber dennoch zuverlässig die Menge an in dem Behälter 3 noch vorhandenem Reinigungs-/Entkalkungsmittel 4 abschätzen, ohne dass hierfür zusätzliche Sensoren, Hardware und insbesondere auch Bauraum für diese Komponenten erforderlich wäre.

### Bezugszeichenliste

- 1: Getränkeautomat
- 2: Kaffeevollautomat
- 3: Behälter
- 4: Reinigungs-/Entkalkungsmittel
- 5: Anschluss
- 6: Überlauf
- 7: Rinne
- 8: Tropfschale
- 9: Leitung
- 10: Pumpe
- 11: Durchflussmesser
- 12: Kontrolleinrichtung
- 13: Anzeigeeinrichtung
- 14: Füllstand
- 15: Deckel
- 16: Heizeinrichtung

## Patentansprüche

1. Getränkeautomat (1), insbesondere ein Kaffeevollautomat (2), mit einem Behälter (3) zur Bevorratung eines Reinigungs-/Entkalkungsmittels (4), der in einem unteren Bereich einen Anschluss (5) an eine Leitung (9) und in einem oberen Bereich einen Überlauf (6) aufweist, wobei über die Leitung (9) und den Anschluss (5) Wasser in den Behälter (3) einfüllbar und über den Anschluss (5) aus dem Behälter (3) ablassbar ist, **dadurch gekennzeichnet, dass**
im Bereich der Leitung (9) eine Pumpe (10) und ein Durchflussmesser (11) angeordnet sind, mit einer Kontrolleinrichtung (12), die derart ausgebildet ist, dass sie aus einer Differenz aus der über den Durchflussmesser (11) in den Behälter (3) gepumpten und einem Behälterleervolumen entsprechenden Wassermenge und der über den Durchflussmesser (11) anschließend wieder aus dem Behälter (3) komplett abgelassenen Wassermenge eine Menge des in dem Behälter (3) vorhandenen Reinigungs-/Entkalkungsmittels (4) ermittelt.

2. Getränkeautomat nach Anspruch 1, **dadurch gekennzeichnet, dass** der Überlauf (6) mit einer Tropfschale (8) verbunden ist.

3. Getränkeautomat nach Anspruch 1 oder 2, **dadurch gekennzeichnet, dass** eine Anzeigeeinrichtung (13) vorgesehen ist, über welche die von der Kontrolleinrichtung (12) ermittelte Menge des in dem Behälter (3) vorhandenen Reinigungs-/Entkalkungsmittels (4) visualisierbar ist.

4. Getränkeautomat nach einem der vorhergehenden Ansprüche, **dadurch gekennzeichnet, dass** das Reinigungs-/Entkalkungsmittel (4) Tablettenform aufweist.

5. Getränkeautomat nach einem der vorhergehenden Ansprüche, **dadurch gekennzeichnet, dass** eine Heizeinrichtung (16) zum Beheizen des Behälters (3), insbesondere zum Beheizen des in dem Behälter (3) vorhandenen Reinigungs-/Entkalkungsmittels (4) vorgesehen ist.

6. Getränkeautomat nach Anspruch 5, **dadurch gekennzeichnet, dass** die Heizeinrichtung (16) in der Art einer Wärmeplatte unterhalb des Reinigungs-/Entkalkungsmittels (4) angeordnet ist.

7. Getränkeautomat nach Anspruch 5 oder 6, **dadurch gekennzeichnet, dass** die Heizeinrichtung (16) Bestandteil einer Brüheinrichtung des in diesem Fall als Kaffeevollautomaten (2) ausgebildeten Getränkeautomaten (1) ist.

8. Verfahren zur Abschätzung einer Menge an Reinigungs-/Entkalkungsmittel (4) in einem Behälter (3) eines Getränkeautomaten (1) nach einem der vorhergehenden Ansprüche, bei dem die Pumpe (10) eine vordefinierte und einem Behälterleervolumen des Behälters (3) entsprechende Wassermenge über den Anschluss (5) in den Behälter (3) pumpt und über den Durchflussmesser (11) misst, bei dem das Wasser anschließend über den Anschluss (5) wieder komplett aus dem Behälter (3) abgelassen und über den Durchflussmesser (11) gemessen wird, bei dem die Kontrolleinrichtung (12) aus der Differenz aus der in den Behälter (3) gepumpten Wassermenge und der anschließend wieder aus dem Behälter (3) komplett abgelassenen Wassermenge eine Menge des in dem Behälter (3) vorhandenen Reinigungs-/Entkalkungsmittels (4) ermittelt.

9. Verfahren nach Anspruch 8, dass in einem vorgelagerten Verfahrensschritt bei einem Reinigungs-/Entkalkungsvorgang eine Heizeinrichtung (16) das in dem Behälter (3) vorhandene Reinigungs-/Entkalkungsmittels (4) beheizt.

## Claims

1. Automatic drinks machine (1), in particular a fully automatic coffee machine (2), with a container (3) for storage of a cleaning/descaling agent (4), which automatic drinks machine has a connection (5) to a line (9) in a lower region and an overflow (6) in an upper region, wherein water can be poured into the container (3) through the line (9) and the connection (5) and can be emptied out of the container (3) through the connection (5), **characterised in that** a pump (10) and a flow meter (11) are arranged in the region of the line (9), with a control facility (12) which is configured to determine an amount of cleaning/descaling agent (4) present in the container (3) from a difference between the amount of water pumped through the flow meter (11) into the container (3) and corresponding to the empty volume of the container and the amount of water which is then completely emptied out of the container (3) again.

2. Automatic drinks machine according to claim 1, **characterised in that** the overflow (6) is connected to a drip pan (8).

3. Automatic drinks machine according to claim 1 or 2, **characterised in that** a display facility (13) is provided, by way of which an amount of cleaning/descaling agent (4), determined by the control facility (12), which is present in the container (3) can be visualised.

4. Automatic drinks machine according to one of the preceding claims, **characterised in that** the cleaning/descaling agent (4) is in the form of a tablet.

5. Automatic drinks machine according to one of the preceding claims, **characterised in that** a heating facility (16) is provided for heating the container (3), in particular for heating the cleaning/descaling agent (4) present in the container (3).

6. Automatic drinks machine according to claim 5, **characterised in that** the heating facility (16) is arranged beneath the cleaning/descaling agent (4) as a type of heating plate.

7. Automatic drinks machine according to claim 5 or 6, **characterised in that** the heating facility (16) is a component of a brewing facility of the automatic drinks machine (1) configured in this case as a fully automatic coffee machine (2).

8. Method for estimating an amount of cleaning/descaling agent (4) in a container (3) of an automatic drinks machine (1) according to one of the preceding claims, in which the pump (10) pumps a predefined amount of water corresponding to the empty volume of the container through the connection (5) into the container (3) and measures said amount of water by way of the flow meter (11), in which the water is then completely emptied out of the container (3) again through the connection (5) and measured by way of the flow meter (11), in which the control facility (12) determines an amount of cleaning/descaling agent (4) present in the container (3) from the difference between an amount of water pumped into the container (3) and the amount of water which is then completely emptied out of the container (3) again.

9. Method according to claim 8, in which, in a previous method step, a heating facility (16) heats the cleaning/descaling agent present (4) in the container (3) as part of a cleaning/descaling procedure.

## Revendications

1. Distributeur automatique de boissons (1), en particulier une machine à café automatique (2), comprenant un récipient (3) pour stocker un produit de nettoyage / détartrage (4), qui comprend dans une section inférieure un raccordement (5) à une conduite (9) et dans une section supérieure un trop-plein (6),
dans lequel de l'eau peut être introduite dans le récipient (3) via la conduite (9) et le raccordement (5) et peut être évacuée via le raccordement (5) hors du récipient (3), **caractérisé en ce qu'**une pompe (10) et un débitmètre (11) sont agencés dans la région de la conduite (9),
et comprenant un dispositif de contrôle (12) qui est configuré de telle manière qu'il détermine une quantité du produit de nettoyage / détartrage (4) présente dans le récipient (3) à partir d'une différence entre la quantité d'eau pompée dans le récipient (3) à travers le débitmètre (11) et correspondant à un volume libre du récipient et la quantité d'eau entièrement évacuée ensuite de nouveau du récipient (3) à travers le débitmètre (11).

2. Distributeur automatique de boissons selon la revendication 1, **caractérisé en ce que** le trop-plein (6) est relié à un bac collecteur (8).

3. Distributeur automatique de boissons selon la revendication 1 ou 2, **caractérisé en ce qu'**un dispositif d'affichage (13) est prévu, par lequel la quantité déterminée par le dispositif de contrôle (12) du produit de nettoyage / détartrage (4) se trouvant dans le récipient (3) peut être visualisée.

4. Distributeur automatique de boissons selon l'une des revendications précédentes, **caractérisé en ce que** le produit de nettoyage / détartrage (4) présente une forme de pastille.

5. Distributeur automatique de boissons selon l'une des revendications précédentes, **caractérisé en ce qu'**un moyen de chauffage (16) est prévu pour chauffer le récipient (3), en particulier pour chauffer le produit de nettoyage / détartrage (4) se trouvant dans le récipient (3).

6. Distributeur automatique de boissons selon la revendication 5, **caractérisé en ce que** le moyen de chauffage (16) est agencé à la manière d'une plaque chauffante en dessous du produit de nettoyage / détartrage (4).

7. Distributeur automatique de boissons selon la revendication 5 ou 6, **caractérisé en ce que** le moyen de chauffage (16) est une composante d'un dispositif d'infusion du distributeur automatique de boissons (1) constitué dans ce cas sous forme d'une machine à café automatique (2).

8. Procédé pour évaluer une quantité de produit de nettoyage / détartrage (4) dans un récipient (3) d'un distributeur automatique de boissons (1) selon l'une des revendications précédentes,
dans lequel la pompe (10) pompe une quantité d'eau prédéfinie et correspondant à un volume libre du récipient (3) via le raccordement (5) dans le récipient (3) et la mesure par l'intermédiaire du débitmètre (11),
dans lequel l'eau est entièrement évacuée de nouveau ensuite du récipient (3) via le raccordement (5) et est mesurée par l'intermédiaire du débitmètre (11), et
dans lequel le dispositif de contrôle (12) détermine une quantité du produit de nettoyage / détartrage (4) présente dans le récipient (3) à partir d'une différence entre la quantité d'eau pompée dans le récipient (3) et la quantité d'eau entièrement évacuée ensuite de nouveau hors du récipient (3).

9. Procédé selon la revendication 8, **caractérisé en ce que**, dans une étape de procédé préalable pour une opération de nettoyage / détartrage, un moyen de chauffage (16) chauffe le produit de nettoyage / détartrage (4) se trouvant dans le récipient (3).
